# DEMANDE DE BREVET EUROPEEN

(11) **EP 1 857 363 A1**
(43) Date de publication de la demande: **21.11.2007**
(21) Numéro de dépôt: 06114251.9
(22) Date de dépôt: 19.05.2006
(51) Int. Cl.: B64F 1/36, F24F 1/02

(54) **Dispositif de régulation de température**

(71) Demandeur: Lebrun Nimy, 7020 Nimy (BE)
(72) Inventeur: Urbain, Claudy, 7131, Waudrez (BE)
(74) Mandataire: Leherte, Georges M.L.M.

(57) **Abrégé**

L'invention concerne un dispositif de régulation destiné à apporter de l'air conditionné (air chaud et froid) à des espaces divers, tel que des avions en stationnement, en offrant, de manière automatique, la puissance (chaude ou froide) maximale possible, par l'utilisation d'un ventilateur avec variateur de vitesse, d'une batterie de chaud et de froid adaptant automatiquement la puissance frigorifique ou de chauffage, d'un système de régulation du compresseur, de condenseurs avec variateur de vitesse, et/ou d'un système économiseur, et, optionnellement, d'un programme informatique pilotant ces diverses fonctions.

## Description

L'invention concerne un dispositif de régulation destiné à apporter de l'air conditionné (air chaud et froid) à des espaces divers, tel que des avions en stationnement.

Le dispositif décrit dans le présent document et illustré dans les plans en annexe, présente différentes originalités ayant le caractère d'innovation.

Les caractéristiques innovantes du dispositif sont les suivantes :
1. Le produit est capable de donner dans toutes circonstances la puissance (chaude ou froide) maximale possible et ce, de manière automatique, et en s'adaptant automatiquement à tout type d'avion. Une combinaison des dispositifs suivants a permis la réalisation de cette caractéristique :
   - Ventilateur avec variateur de vitesse travaillant au débit maximal possible, dans les limites de la puissance maximale autorisée dans l'avion.
   - Batterie de chaud et de froid adaptant automatiquement la puissance frigorifique ou de chauffage pour tenir la température d'air désirée en s'adaptant au débit d'air variable avec plusieurs détendeurs électroniques.
   - Système de régulation du compresseur à vis ou à pistons adaptant la puissance frigorifique aux besoins de la batterie.
   - Condenseurs avec variateur de vitesse pour adaptation aux besoins frigorifiques variables.
   - Programme informatique pilotant ces diverses fonctions.
   - Système d'économiseur.
2. Ce produit permet un maximum de puissance froide et chaude dans une dimension donnée en en contrôlant grâce aux différents variateurs de vitesse l'intensité du courant de démarrage, permettant ainsi avec un groupe électrogène de puissance électrique donnée, d'augmenter sensiblement la capacité nette de chauffage et de réfrigération.
3. Ce produit s'adapte automatiquement aux conditions climatiques externes (température et humidité extérieures) et fonctionne en mode dégradé pour donner le maximum de puissance chaude ou froide possible.
4. Le flux d'air est un élément important dans ce produit, le caisson lui-même, grâce aux joints particuliers, forme un gainage étanche à travers lequel l'air extérieur circule, entrant dans le produit par des bouches situées en hauteur, circulant ensuite à l'intérieur de ce caisson et ventilant ainsi les différents éléments pour ensuite être aspiré par le ventilateur et être pulsé dans la batterie qui chauffe ou refroidit cet air. Ce mode de fonctionnement particulièrement efficace est rendu possible par les dispositifs suivants :
   - Une grille d'aspiration située sur le dessus à l'avant du timon permettant une introduction d'air sans ouverture susceptible de laisser s'infiltrer de la pluie et permettant une entrée d'air relativement moins pollué car situé en hauteur.
   - Un système de fermeture des cloisons extérieures du caisson assurant l'isolation de ce caisson et améliorant son étanchéité à mesure que la dépression augmente au prorata de la puissance d'aspiration du ventilateur.
   - Une position du ventilateur moteur vertical situé au-dessus de la bouche d'aspiration de ce ventilateur.
   - Une isolation intérieure empêchant toute entrée d'air intempestive.
   - Une isolation par une paroi étanche entre la partie aéraulique du produit et la partie groupe électrogène.
5. La disposition particulière des différents éléments présents sur les plans en annexe a permis la réalisation d'un produit de cette puissance, tout en limitant l'encombrement à des dimensions faibles et en favorisant la pureté de l'air traité et la facilité d'usage de ce produit.
   - Des filtres placés à l'avant de l'appareil.
   - Des bouches de sortie placées à l'avant de l'appareil.
   - La batterie chaud/froid située sur le devant.
   - Le compresseur et ses accessoires placés à l'arrière droit de l'appareil en vis à vis du ventilateur.
   - Des éléments de porte démontables au regard des éléments les plus encombrants (compresseur, batterie, ventilateur) permettant un démontage aisé de ces éléments.
   - Une position du réservoir de fuel en dessous du groupe électrogène logé à l'arrière au niveau des essieux dans un compartiment isolé.
   - Les armoires électriques situées au centre gauche du produit.
6. Un système de clapet original permettant l'ouverture ou la fermeture de l'une des deux bouches de sortie d'air a été réalisé ; il permet de basculer facilement d'une position 2 bouches ouvertes à une seule.
7. Consommation de fuel réduite grâce à l'économiseur en mode froid et à la récupération de chaleur du groupe électrogène en mode chaud.
8. Maintenance facilitée et réduite :
   - Accès aisé aux différents composants du groupe et aux organes de sécurité via des panneaux de taille réduite.
   - Agencement des composants et conception du châssis permettant le retrait aisé de n'importe quel composant du groupe.
   - Panneau de maintenance caché et verrouillé (accessible uniquement au personnel de maintenance), séparé du panneau de commande du groupe, incluant une identification des pannes éventuelles par allumage de 4 lampes (combinaisons de ces 4 lampes - 16 défauts).
9. Faible niveau sonore :
   Spécialement près du panneau de commande, obtenu en rassemblant et en isolant les composants bruyants et en localisant le compartiment générateur diesel à l'arrière du groupe et en l'isolant.
10. Facilité d'utilisation :
   - Zone de stockage de gaines à l'avant et en partie intégrée au groupe.
   - Panneau de commande sans sélection de débit d'air avec seulement 2 boutons principaux :
      - Un marche/arrêt.
      - L'autre, soit :
         - chaud,
         - froid,
         - ventilation.
   - Possibilité de décrochage immédiat des gaines après arrêt en mode chaud grâce à la mise en place d'un système de clapet permettant la ventilation des résistances.
   - Manoeuvrabilité : Grâce à l'agencement des différents composants permettant une distribution des masses favorisant l'équilibre et la manoeuvrabilité (cercle de braquage : 4, 8 m).
11. Etanchéité du groupe par l'utilisation de joints spécifiques au niveau des panneaux et une forme particulière de ces panneaux permettant un ruissellement de l'eau de pluie aux endroits prévus.

Les principes à la base des perfectionnements selon la présente invention comprennent les concepts suivants :

### Le concept de l'AUTOADAPTABILITE

Le but de l'appareil est l'apport d'air à des utilisateurs (engins, locaux, ...) présentant des caractéristiques de tuyauterie (courbe débit/pression) différentes fixes ou variables dans le temps.

L'auto adaptabilité de l'appareil permet en toutes circonstances la distribution d'un débit d'air optimal à la situation instantanée observée.

### But du groupe de refroidissement :

Rafraîchissement ou réchauffage rapide d'enceintes munies ou non de leur propre système de distribution d'air par connexion sur celui-ci.

Chaque enceinte (utilisateur) est caractérisée par une courbe débit/pression qui lui est propre.

Cette caractéristique peut être fixe ou évoluer dans le temps.

En vue d'un rafraîchissement ou réchauffage rapide, la puissance délivrée doit être la plus importante possible quelles que soient les circonstances.

Pour délivrer cette puissance, on doit s'assurer d'avoir :
a) Le débit d'air maximum en respectant la pression maximum admissible caractéristique de l'utilisateur et des organes mécaniques du groupe de pulsion.
b) La température minimum en continu quelles que soient les conditions de température et d'humidité et le débit d'air.

### Assurer le débit maximum

D'un point de vue aéraulique, la courbe caractéristique des utilisateurs peut varier en fonction :
- de la taille de l'utilisateur,
- des caractéristiques propres,
- des circonstances de l'environnement de connexion,
- de certaines variables dans le temps (ouverture ou modification du gainage de distribution d'air).

Afin d'obtenir une adaptation rapide, la courbe du ventilateur doit évoluer rapidement. Celui-ci sera ainsi équipé d'un variateur de fréquence. Ce dernier sera contrôlé par une sonde différentielle de pression contrôlant la pression à l'intérieur.

La pression est contrôlée au niveau du caisson logeant la batterie (évaporateur) chargée du refroidissement de l'air.

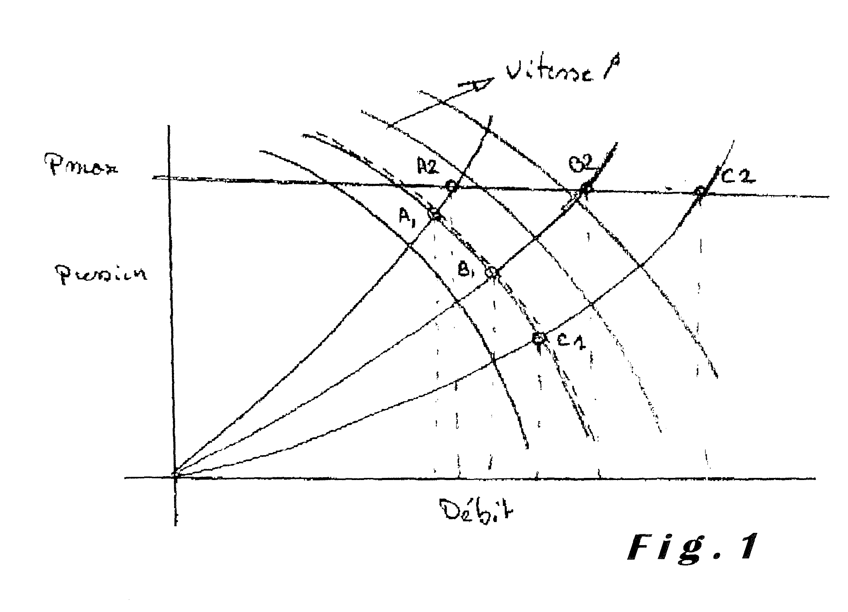

La mise en oeuvre de ce concept est illustrée par la figure 1 en annexe, montrant des courbes de pression en fonction du débit de l'air (illustrant le cas de ventilateurs a vitesse fixe, impliquant un équilibre en A1, B1 et C1, et la variante à vitesse variable en fonction d'une valeur Pₘₐₓ , impliquant un équilibre en A2, B2 et C2).

3 cas peuvent se présenter par rapport à un système fixe.
- Pour un point fixe donné (courbe utilisateur fixée), une caractéristique du ventilateur peut suffire.
- Si la perte de charge de l'utilisateur diminue, le débit augmente mais le groupe est en sous capacité. La modification de la caractéristique du ventilateur permet une augmentation plus importante du débit.
- Si le débit augmente mais que le groupe est sous-utilisé, il est alors intéressant de modifier la caractéristique du ventilo-convecteur en augmentant la vitesse.
- Si la perte de charge de l'utilisateur augmente, on risque un déclenchement par sécurité. Une réduction de la vitesse permet au ventilateur d'adapter sa courbe au besoin.
- Si un déclenchement par sécurité se produit il faut normalement réduire la vitesse pour permettre à l'ensemble de fonctionner.

Un fonctionnement avec des vitesses sélectionnées au départ est restrictif lorsque la caractéristique de l'utilisateur évolue au cours du temps.

Le système basé sur le maintien de la pression permet au système de s'auto-adapter en donnant à tout moment le débit maximum admissible.

### Assurer la température de sortie minimum

Pour donner la puissance adéquate, l'équilibrage du débit avec les caractéristiques de l'utilisateur doit s'accompagner d'un équipement capable de fournir en toutes circonstances la température minimum.

Idéalement, la température de pulsion devra être supérieure à 0°C afin d'éviter la formation de givre sur les pièces de connexion ou le système de distribution d'air de l'utilisateur sur lequel le groupe est connecté. De même, la température ne peut pas excéder certaines limites hautes au-delà desquelles l'intégrité des matériaux serait atteinte.

C'est la raison pour laquelle cette température doit être contrôlée afin de maintenir celle-ci proche de la limite basse en mode rafraîchissement ou de la limite haute en mode chauffage sans dépasser les limites.

### Contrôle de la température en mode rafraîchissement :

La charge frigorifique à laquelle l'équipement doit faire face varie en fonction :
- du débit d'air,
- de la température extérieure.

Un équipement surdimensionné peut conduire à un fonctionnement inadéquat avec une température de pulsion trop basse et des cycles de démarrage/arrêt de l'équipement frigorifique trop courts qui peuvent dégrader la machine.

A l'inverse, un équipement sous-dimensionné ne permet pas d'atteindre la température adéquate.

De plus, il faut savoir qu'une installation frigorifique classique et notamment les détendeurs, sont réglés pour un point de design particulier. L'évolution des conditions peut amener ce réglage à être inadapté :
- Soit l'ouverture du détendeur est trop faible (charge plus élevée que prévu) ; dans ce cas le débit de fluide frigorigène est trop faible et la puissance frigorifique est trop faible.
- Soit l'ouverture du détendeur est trop grande (charge plus faible que prévu) ; dans ce cas le débit de frigorigène est trop important et le risque d'un retour de liquide non évaporé vers le compresseur est grand. Ce retour de liquide peut s'accompagner de dégâts matériels à l'équipement.

Comme nous l'avons vu plus haut, le débit de l'équipement variera non seulement d'une application à l'autre mais également au cours du temps. Cette variation entraînera une modification de la charge frigorifique accentuée par les conditions extérieures changeantes (température et humidité).

L'équipement frigorifique doit donc faire face à ces modifications et s'adapter rapidement pour permettre une température de pulsion d'air adéquate et un réglage automatique correct de son débit de fluide frigorigène.

Pour réaliser cette contrainte, nous avons utilisé une batterie (échangeur) froide à plusieurs circuits, afin de permettre une modulation de puissance.

Chacun des circuits de la batterie est alimenté par un détendeur dont le réglage se fait de manière électronique pour permettre l'adaptation du débit de fluide frigorigène à la charge nécessaire de l'utilisateur.

Le régulateur du détendeur électronique contrôle plusieurs grandeurs physiques :
- la température de surchauffe à la sortie de chacun des circuits de la batterie pour s'assurer qu'il n'y a pas de retour de liquide vers le compresseur.
- La température d'air après la batterie afin de contrôler si celle-ci ne s'éloigne pas du point de consigne fixé (limite basse) (1 sonde par circuit)
- La température de batterie qui donne une information sur la possible formation de givre sur la batterie (1 sonde par circuit)
- La pression d' évaporation (1 seule sonde nécessaire par circuit frigorifique) qui permet une correction de la température de surchauffe afin d'avoir la valeur exacte de celle-ci.

En fonction de ces contrôles, le régulateur détermine le degré d'ouverture de chaque détendeur.

Cette (ces) ouverture(s) comme mentionné plus haute influence le débit du fluide frigorifique de sorte que le reste de l'équipement frigorifique doit également adapter sa capacité au débit frigorifique.

### Le compresseur frigo

Le compresseur frigorifique doit réguler sa capacité rapidement (afin d'adapter celle-ci à celle du besoin).

En surcapacité, la pression d'aspiration diminue et un déclenchement en basse pression (pressostat BP, limite basse de l'installation frigorifique) peut déclencher. Pour des raisons de bonne tenue mécanique de la machine, le nombre de démarrages horaires est limité de sorte qu'il est préférable de garder le compresseur en fonctionnement.

De plus, l'arrêt du compresseur perturbe fortement la température de pulsion qui remonte rapidement. La température de consigne ne pourra être retrouvée qu'après une phase de redémarrage et de remise en régime, ce qui peut s'avérer trop long pour l'utilisateur.
En sous-capacité, la température de l'air pulsé augmente et s'éloigne de la consigne désirée.

Le compresseur retenu est de type à vis. La régulation de capacité est réalisée à l'aide d'une sonde basse pression et d'un tiroir de capacité entre les deux vis du compresseur. L'ensemble est contrôlé par un automate.

Afin de maintenir le compresseur en fonctionnement en respectant les consignes mais sans impulsions trop rapprochées au niveau de la régulation, nous avons défini une plage de pression d'évaporation à l'intérieur de laquelle le compresseur garde son étage de régulation (sa capacité frigorifique) identique à celui qu'il avait en entrant dans la plage. Ceci évite des mouvements intempestifs sur les vannes de régulation du compresseur en maintenant le compresseur dans une étendue de fonctionnement en accord avec l'effet désiré.

### Le condenseur

Le condenseur de l'installation frigorifique est du type à air. Sa régulation permet le maintien en haute pression (pression de condensation) dans des limites acceptables. Cependant, si la limite haute de la pression de condensation arrête instantanément la machine, l'influence d'une basse pression de condensation peut perturber le bon fonctionnement de l'ensemble de l'installation. Il en est de même des variations importantes de cette pression de condensation.

La régulation du condenseur est contrôlée par une sonde haute pression et un variateur de fréquence.

L'ensemble ainsi régulé permet une stabilité de la pression de condensation qui améliore l'efficacité des détendeurs électroniques en charge de l'adaptation du débit frigorigène dans la batterie froide.

### Contrôle de la température en mode chauffage

Le contrôle de la température en mode chauffage est réalisé par l'automate qui enclenche ou déclenche un ensemble d'étages de batterie pour atteindre l'effet désiré.

L'automate combine ainsi l'effet d'une récupération de chaleur sur le moteur associée à des résistances électriques complémentaires permettant d'augmenter la chaleur directement mais également d'augmenter la charge du moteur, ce qui conduit à une plus grande récupération de chaleur (effet indirect).

### Le concept de la REGULATION

Le contrôle de l'ensemble du groupe est géré par des régulateurs indépendants et un automate programmable central. Cet automate gère les différents modes de fonctionnement demandés par l'utilisateur ainsi que le contrôle des différentes parties de l'équipement (fonctionnement et sécurités).
Comme dit précédemment, l'arrêt d'une partie de l'équipement peut causer des perturbations importantes de la température de l'air pulsé. Pour éviter ces inconvénients, nous avons créé une série de modes dégradés permettant à la machine de continuer à fonctionner parfois en sous capacité mais toujours en limitant l'effet sur la température de l'air pulsé ou la quantité d'air fourni.

### Mode dégradé « haute pression » :

Lorsque la limite haute pression de l'équipement frigorifique est atteinte, le compresseur doit être arrêté.

Avant d'atteindre cette limite, le contrôle de la haute pression diminue, à partir d'un certain seuil, la capacité du compresseur, limitant également la capacité du condenseur, ce qui permet à la haute pression de ne plus augmenter. Le compresseur se trouvant en légère sous capacité, la température de l'air pulsé s'éloigne du point de consigne mais la perturbation est limitée.

### Mode dégradé « surintensité » :

Le groupe de pulsion est soit autonome, soit alimenté par prise électrique, dans les deux cas, il existe un courant maximum à ne pas dépasser. Le dépassement de ce courant entraîne l'arrêt du fonctionnement du groupe. Le mode dégradé « surintensité » permet le contrôle de l'intensité de la machine et diminue sa consommation en agissant sur différents éléments en fonction du mode de fonctionnement.

En mode froid : le mode dégradé agit sur la capacité du compresseur jusqu'à ce que la consommation de courant retrouve une valeur acceptable. Le compresseur peut momentanément se retrouver en sous-capacité, la température de l'air pulsé s'éloigne de la consigne mais la perturbation est peu importante et le groupe continue à fonctionner en automatique.

En mode chaud : le mode dégradé agit sur le nombre d'étages enclenchés de la batterie de chauffe électrique. De la sorte, il est certain que la capacité de chauffage sera la plus importante possible au vu des circonstances rencontrées.

### Mode dégradé « dégivrage » :

Le fonctionnement en mode refroidissement doit se faire avec une température de pulsion d'air légèrement supérieure à 0°C. Ceci n'empêche pas le givrage de l'échangeur en charge du refroidissement de l'air étant donné que le fluide frigorigène aura une température légèrement inférieure à 0°C pour assurer la capacité de la machine.

Le givrage partiel ou complet de la batterie (évaporateur) perturbe le bon fonctionnement de l'ensemble et peut conduire à l'arrêt de la production de froid et à l'arrêt de la ventilation.

Pour résoudre ce problème, le mode dégradé « dégivrage » a été créé. Celui-ci permet au système de travailler en sous capacité temporaire avec une température d'évaporation permettant le dégivrage de la batterie (température d'évaporation légèrement supérieure à 0°C).

### Concept du CIRCUIT DE REFROIDISSEMENT INTERNE

La combinaison des différentes contraintes dimensionnelles et acoustiques entraîne une réalisation du groupe compacte et cloisonnée dans un ensemble de panneaux de carrosserie.
Chaque équipement, en raison des pertes de rendement, dégage de la chaleur. Cette chaleur accumulée dans un espace clos peut cause de graves dommages à l'ensemble et conduire à l'arrêt ou la panne de l'équipement. Une ventilation de cet espace, en raison des contraintes acoustiques à respecter, s'avère compliquée, volumineuse et coûteuse.

Le principe de refroidissement retenu utilise l'air « process » pour permettre la ventilation interne de l'espace confiné où se trouvent les équipements.
La construction du caisson a été réalisée afin d'éviter la pollution de l'air process.

A cet effet :
- Le groupe électrogène (si présent) est cloisonné du reste des équipements avec tous ses appareils satellites (silencieux, réservoir carburant, alternateur, échappement et radiateur) par une paroi étanche empêchant la pollution de l'air process par des effluves non tolérables.
- L'air du process est fortement filtré à l'entrée du groupe par un « mur filtrant ». La construction de la carrosserie forme un caisson autour des équipements techniques à ventiler et refroidir. Les différents panneaux de carrosserie sont constitués pour assurer une étanchéité parfaite. Cette étanchéité est accentuée en utilisant la dépression du ventilateur principal véhiculant l'air du « process ».
- L'air de refroidissement du condenseur à air est directement utilisé à partir de l'extérieur du groupe. Aucune pollution ne peut venir de cet air (circuit totalement indépendant) et l'efficacité du condenseur s'en trouve améliorée.
- L'air du refroidissement du groupe électrogène est un circuit indépendant du reste. La carrosserie et les panneaux acoustiques autour de celui-ci forment un gainage dans lequel l'air circule, véhiculé par les ventilateurs du radiateur. L'air est aspiré par le bas de l'appareil (endroit plus frais), la dépression des ventilateurs du radiateur est utilisée pour accentuer l'étanchéité.
- Pour favoriser et augmenter le travail des filtres, la prise d'air pour le process se fait sur la partie supérieure du groupe, ce qui limite la pollution atmosphérique (poussière)

### Concept de COMPACITE

Le respect des contraintes dimensionnelles de l'ensemble, tout en maintenant un niveau de puissance important, n'a pu se faire qu'après dimensionnement précis de chaque organe et étude complète de la disposition de chaque élément.

En mode rafraîchissement, les éléments permettant les meilleurs rendements sont :
- le choix du fluide frigorigène : R134a.
- l'utilisation d'un condenseur adéquat permettant la limitation de la puissance absorbée par le compresseur.
- l'utilisation d'un échangeur augmentant le sous refroidissement du liquide, contrôlé par un détendeur électronique.
- l'utilisation d'une surface d'échange importante au niveau de l'évaporateur afin d'accroître l'efficacité du compresseur.
- l'utilisation de chicanes (déflecteurs) dans le cône entre le ventilateur et l'évaporateur permet une ouverture plus importante de l'angle de diffusion d'air et donc une meilleure répartition d'air sur l'évaporateur pour un meilleur rendement général.

En mode chauffage, ces éléments sont :
- L'utilisation d'un radiateur supplémentaire permettant la récupération de la chaleur dégagée par le moteur au niveau du chauffage de l'air « process ».
Ce transfert se fait via le fluide (liquide) de refroidissement du moteur, ce qui évite la pollution de l'air process.
Une vanne à 3 directions permet le passage du circuit de refroidissement conventionnel au circuit de récupération.

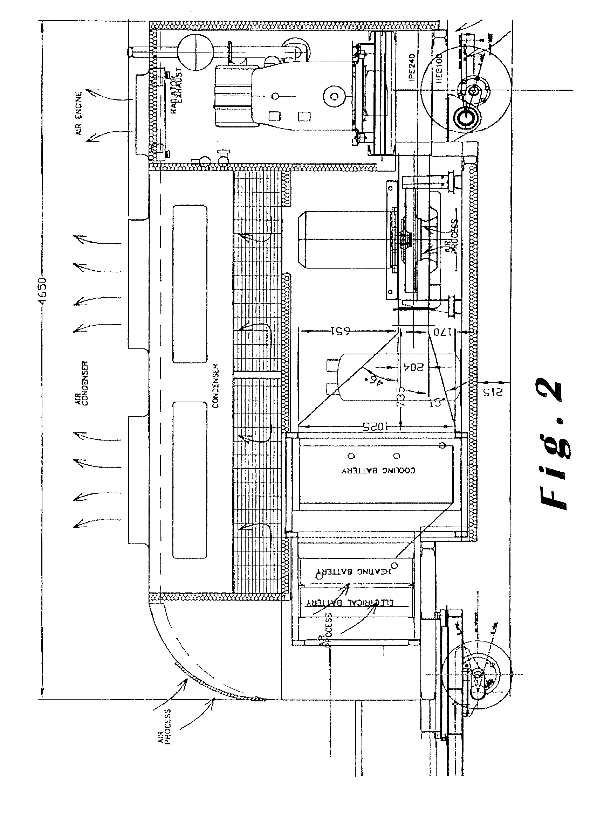

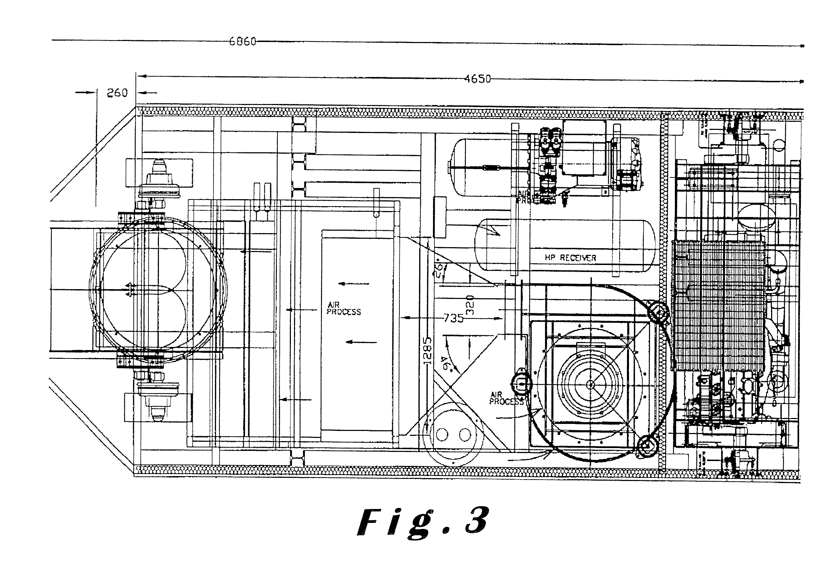

Les divers aspects de l'invention énoncés si dessus sont illustrés par un mode de réalisation du dispositif selon l'invention, représenté dans les figures 2 et 3, montrant, respectivement une vue latérale et une vue de dessus de ce mode de réalisation.

## Revendications

1. Dispositif de régulation destiné à apporter de l'air conditionné (air chaud et froid) à des espaces divers, tel que des avions en stationnement, **caractérisé en ce que** le dispositif donne dans toutes circonstances la puissance (chaude ou froide) maximale possible et ce, de manière automatique, par application d'un ou plusieurs des moyens suivants
. utilisation d'un ventilateur avec variateur de vitesse travaillant au débit maximal possible, dans les limites de la puissance maximale autorisée dans l'espace;
. utilisation d'une batterie de chaud et de froid adaptant automatiquement la puissance frigorifique ou de chauffage pour tenir la température d'air désirée en s'adaptant au débit d'air variable avec plusieurs détendeurs électroniques;
. utilisation d'un système de régulation du compresseur à vis ou à pistons adaptant la puissance frigorifique aux besoins de la batterie;
. utilisation de condenseurs avec variateur de vitesse pour adaptation aux besoins frigorifiques variables;
. utilisation d'un programme informatique pilotant ces diverses fonctions;.
. utilisation d'un système d'économiseur.

2. Dispositif de régulation destiné à apporter de l'air conditionné (air chaud et froid) à des espaces divers, tel que des avions en stationnement, **caractérisé en ce qu'**il permet un maximum de puissance froide et chaude dans une dimension donnée en contrôlant, grâce aux différents variateurs de vitesse, l'intensité du courant de démarrage, permettant ainsi avec un groupe électrogène de puissance électrique donnée, d'augmenter sensiblement la capacité nette de chauffage et de réfrigération.

3. Dispositif de régulation destiné à apporter de l'air conditionné (air chaud et froid) à des espaces divers, tel que des avions en stationnement, **caractérisé en ce qu'**il s'adapte automatiquement aux conditions climatiques externes (température et humidité extérieures) et fonctionne en mode dégradé pour donner le maximum de puissance chaude ou froide possible.

4. Dispositif de régulation destiné à apporter de l'air conditionné (air chaud et froid) à des espaces divers, tel que des avions en stationnement, **caractérisé en ce que** le caisson lui-même forme un gainage étanche à travers lequel l'air extérieur circule, entrant dans le produit par des bouches situées en hauteur, circulant ensuite à l'intérieur de ce caisson et ventilant ainsi les différents éléments pour ensuite être aspiré par le ventilateur et être pulsé dans la batterie qui chauffe ou refroidit cet air.

5. Dispositif selon la revendication 4, **caractérisé en ce qu'**il met en oeuvre un ou plusieurs des moyens suivants
- des joints particuliers,
- une/des grille(s) d'aspiration située(s) sur le dessus à l'avant du timon permettant une introduction d'air sans ouverture susceptible de laisser s'infiltrer de la pluie et permettant une entrée d'air relativement moins pollué car situé en hauteur,
- un système de fermeture des cloisons extérieures du caisson assurant l'isolation de ce caisson et améliorant son étanchéité à mesure que la dépression augmente au prorata de la puissance d'aspiration du ventilateur;
- une position du ventilateur moteur vertical situé au-dessus de la bouche d'aspiration de ce ventilateur;
- une isolation intérieure empêchant toute entrée d'air intempestive.
- une isolation par une paroi étanche entre la partie aéraulique du produit et la partie groupe électrogène.

6. Dispositif de régulation destiné à apporter de l'air conditionné (air chaud et froid) à des espaces divers, tel que des avions en stationnement, **caractérisé en ce qu'**il limite l'encombrement à des dimensions faibles et favorise la pureté de l'air traité et la facilité d'usage de ce produit, par l'utilisation d'un ou plusieurs des moyens suivants :
- filtres placés à l'avant de l'appareil;
- bouches de sortie placées à l'avant de l'appareil;
- batterie chaud/froid située sur le devant;
- compresseur et ses accessoires placés à l'arrière (en particulier à l'arrière droit) du dispositif, en vis à vis du ventilateur;
- éléments de porte démontables au regard des éléments les plus encombrants (compresseur, batterie, ventilateur) permettant un démontage aisé de ces éléments;
- position du réservoir de fuel en dessous du groupe électrogène logé à l'arrière au niveau des essieux dans un compartiment isolé;
- armoires électriques situées au centre (en particulier au centre gauche) du dispositif.

7. Dispositif de régulation destiné à apporter de l'air conditionné (air chaud et froid) à des espaces divers, tel que des avions en stationnement, **caractérisé en ce qu'**il comprend un système de clapet particulier permettant l'ouverture ou la fermeture de l'une des deux bouches de sortie d'air et/ou permettant de basculer facilement d'une position à deux bouches ouvertes à une position à une seule bouche ouverte.

8. Dispositif de régulation destiné à apporter de l'air conditionné (air chaud et froid) à des espaces divers, tel que des avions en stationnement, **caractérisé en ce qu'**il permet une consommation de fuel réduite grâce à l'utilisation d'un économiseur en mode froid et à la récupération de chaleur du groupe électrogène en mode chaud.

9. Dispositif de régulation destiné à apporter de l'air conditionné (air chaud et froid) à des espaces divers, tel que des avions en stationnement, **caractérisé en ce qu'**il permet une maintenance facilitée et réduite, par l'utilisation d'un ou plusieurs des moyens suivants :
- accès aux différents composants du groupe et aux organes de sécurité via des panneaux de taille réduite.
- agencement des composants et conception du châssis permettant le retrait aisé de n'importe quel composant du groupe
- panneau de maintenance caché et verrouillé (accessible uniquement au personnel de maintenance), séparé du panneau de commande du groupe, incluant une identification des pannes éventuelles par allumage de 4 lampes (combinaisons de ces 4 lampes - 16 défauts).

10. Dispositif de régulation destiné à apporter de l'air conditionné (air chaud et froid) à des espaces divers, tel que des avions en stationnement, **caractérisé en ce qu'**il présente un faible niveau sonore, spécialement près du panneau de commande, en rassemblant et en isolant les composants bruyants et en localisant le compartiment générateur diesel à l'arrière du groupe et en l'isolant.

11. Dispositif de régulation destiné à apporter de l'air conditionné (air chaud et froid) à des espaces divers, tel que des avions en stationnement, **caractérisé par** une facilité d'utilisation résultant :
- d'une zone de stockage de gaines à l'avant et en partie intégrée au groupe, et/ou
- d'un panneau de commande sans sélection de débit d'air avec seulement 2 boutons principaux (marche/arrêt d'une part, et chaud, froid ou ventilation, d'autre part), et/ou
- une possibilité de décrochage immédiat des gaines après arrêt en mode chaud grâce à la mise en place d'un système de clapet permettant la ventilation des résistances, et/ou
- une manoeuvrabilité améliorée résultant d'un agencement optimal des différents composants (tel que la distribution des masses favorisant l'équilibre et/ou la manoeuvrabilité dans un cercle de braquage de 4, 8 m).

12. Dispositif de régulation destiné à apporter de l'air conditionné (air chaud et froid) à des espaces divers, tel que des avions en stationnement, **caractérisé par** une 'étanchéité optimale par l'utilisation de joints spécifiques au niveau des panneaux et par une forme particulière de ces panneaux permettant un ruissellement de l'eau de pluie aux endroits prévus.
